Europäisches Patentamt

European Patent Office

Office européen des brevets

(19)

(11) Publication number: 0 098 068
A2

(12) **EUROPEAN PATENT APPLICATION**

(21) Application number: **83303364.0**

(22) Date of filing: **10.06.83**

(51) Int. Cl.³: **B 25 G 1/00**
**B 25 F 3/00**

(30) Priority: **24.06.82 GB 8218258**

(43) Date of publication of application:
**11.01.84 Bulletin 84/2**

(84) Designated Contracting States:
**AT BE CH DE FR GB IT LI LU NL SE**

(71) Applicant: **Thiel, Erwin**
**Mouse Hall Newton Poppleford**
**Sidmouth Devon(GB)**

(72) Inventor: **Thiel, Erwin**
**Mouse Hall Newton Poppleford**
**Sidmouth Devon(GB)**

(74) Representative: **Weston, Robert Dale et al,**
**c/o PHILLIPS & LEIGH 7 Staple Inn**
**Holborn London WC1V 7QF(GB)**

(54) Handle device for a power tool.

(57) A handle device for a portable power tool comprising two side members (3, 4) and a cross-member (5) joining them and forming with a tool or a support member (1) therefor a trapezoidal structure that widens from the tool or support member towards the cross-member and on which spaced handles (12, 13) are formed or attached. The frame members may be hinged one to another so that, in one position, the aforesaid trapezoidal structure is formed and, in another position, a folded structure is formed that is generally aligned with the tool or support member to provide an extension therefor.

EP 0 098 068 A2

./...

FIG. 2

1.

## HANDLE DEVICE FOR A POWER TOOL

This invention relates to a handle device for a portable power tool such as a multi-purpose tool for gardening, horticulture and like purposes.

The device of the invention comprises a frame carrying a motor bracket to which may be attached a motor and a right-angled driving head which drives one part of a separable coupling to which various cutting devices or cultivating tools may be attached. The drive may be similar to that disclosed in my earlier British Patent No.1323186 in which the drive head has a number of spring loaded pegs projecting from the surface adjacent to where tools are attached and the handle device according to the invention comprises two side members and a cross-member joining them and forming with a tool or a support member therefor a trapezoidal structure that widens from the tool or support member towards the cross-member and on which spaced apart handles are formed or attached. For some purposes, such as hedge trimming and tree pruning, the handle device needs to be more or less in line with the motor axis in order to provide adequate reach and an appropriate attitude and, to this end, the frame members are hinged one to another so that a folded structure can be formed that is generally aligned with the tool or support member to provide an extension therefor. The structure may, in its folded position

2.

form a shallow triangle so as to provide a handle intermediate the ends of one of the side members and somewhat raised in relation thereto. The frame may be provided with handles at different points to facilitate its manipulation in various attitudes and the handles may be arranged to be double sided and rotatable about eccentric axes to take up alternative positions in which they are at differing heights in relation to the frame.

It is desirable that the various tools should be quickly interchangeable and a quick-release clutch may form part of the two-part coupling. It is also important, however, that inadvertent release should be prevented. The clutch therefore has a rotatable portion with a non-circular hole into which a corresponding shaft of the tool may be pushed and has a spring-loaded detent which enters a transverse recess in the shaft when it is correctly located. In order to be able to release the tool when required a screw or plunger is arranged on the housing of the clutch so as to be capable of contacting the detent to withdraw it from the recess in the shaft. The detent may be an L-shaped lever, one arm of which serves as the detent proper and the other arm of which is arranged so that it may be contacted when required

3.

by the screw or plunger. The clutch housing can be located by the three studs of the driving head but to allow for error or slight misalignment the rotating part of the clutch is floating, with the non-circular driving connection to the tool shaft being capable of limited movement in a plane at right angles to a plane of limited movement between the two parts of the coupling, both planes including the drive axis. In an alternative form of clutch the detent is provided with a pawl which normally rides on a ratchet ring surrounding the clutch member and provision is made for manually rotating the ratchet ring a limited amount in the forward direction of the drive to disengage the detent from the shaft.

The motor drive is a double insulated unit and to preserve the integrity of the insulation the tool head is attached to the bracket carrying the motor by an insulating tongue, while the drive itself is taken through an insulating dog clutch. In the past this has necessitated attaching the tongue to the frame by a screw passing through a hole in the tongue in order to provide sufficiently accurate positioning. This in turn has slowed down the removal and replacement of the head and according to a feature of the invention a quick-

4.

release fastening for the tongue comprises a screw-down clamp plate for securing the tongue frictionally to a part of the frame, the clamp plate or the frame having a fixed stud projecting to extend into a locating hole in the tongue so as to locate it positively, especially in the longitudinal direction. Preferably the stud can be arranged to be retracted through the frame or bracket to permit straight line insertion of the tongue and at the same time of the dog clutch into engagement with its counterpart in the motor unit. This may be achieved by mounting the stud on a separate bar so as to project through the frame or bracket, a clamp bolt also extending through the frame or bracket at a point clear of the tongue from the bar to a nut on the other side. A spring may be included to hold the parts clear when the clamp is opened.

Other features of the invention will be apparent from the following description, taken in conjunction with the accompanying drawings in which:-

Figure 1 is a side elevation of a machine according to the invention fitted with a head carrying a cutter for clearing long grass and the like,

Figure 2 is a perspective view of the same machine with the frame adapted for use in trimming hedges or

5.

tree-pruning,

Figure 3 is a view of the machine head, partly in section, showing a method of attachment to the motor bracket,

Figures 4 and 5 are respectively a sectional elevation of a quick-release clutch and a section on the line 5-5,

Figures 6 and 7 are respectively a sectional elevation of a further form of quick-release clutch and a section on the line 7-7, and

Figure 8 is an elevation of a tool carrier for use in conjunction with one of the clutches of the previous Figures.

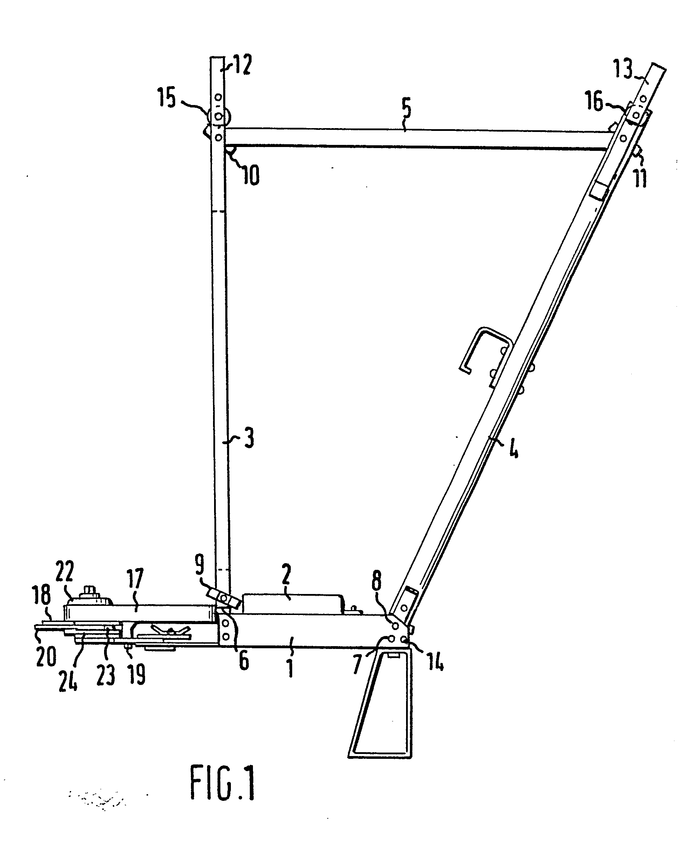

Referring first to Figure 1, a motor bracket 1 on which is mounted a motor 2 forms the base of a trapezoidal frame the remaining components of which are, a pair of vertical bars 3, a backward sloping tubular shaft 4, and a bar 5 joining these two members near their extremities. The bars 3 are hinged to a handle member formed of metal strap 6 and arranged as a yoke across the front end of the bracket 1. The shaft 4 is hinged to the motor bracket 1 about the point 7 and is locked in position by a bolt passing through the holes 8 and through a hole in the shaft 4. The bars 3 are secured to the yoke 6 by bolts which are

6.

attached by means of wing nuts 9. Similar fastenings by means of wing nuts 10 and 11 make the connections between the bar 5 and the bars 3 and the tubular shaft 4 and permit the structure to hinge when the wing nuts are slackened.

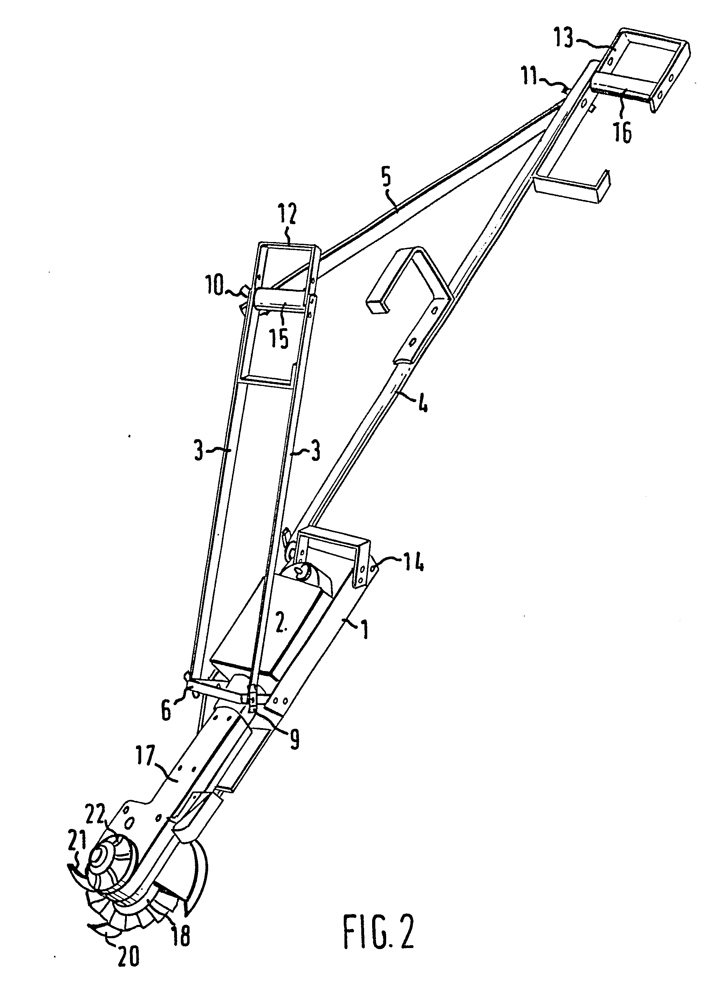

Thus, when it is required to use the machine at a maximum distance from the operator, such as when pruning trees, the bolt 8 can be removed and the wing nuts slackened so as to permit the shaft 4 to be moved into the position shown in Figure 2 where it is in line with the axis of the motor 2. The remainder of the frame then folds into the form of a shallow triangle as shown, so that it occupies a minimum of space and does not interfere with the operation of the machine in these conditions. Furthermore, a handle 12 formed of metal strap and located at the upper end of the bars 3 forms a convenient hold in conjunction with a similar handle 13 at the outer extremity of the shaft 4. When the machine is in this condition, in addition to tightening the wing nuts, the bolt that has been removed from the holes 8 is reinserted through a hole corresponding to the hole 14 in the motor bracket so as to ensure the rigidity of the construction. As will be seen, the handles 12 and 13 are attached to the bars 3 and the bar 4 respectively by being clamped by means of screws

7.

passing through the bars 3 and the shaft 4 respectively and through tubular spacers 15 and 16. Each of the handles has a hole through which the screws pass that are used for connecting the bar 5 to the remaining frame, and if these screws are removed and the handles rotated through 180°, a handle portion that was at the bottom will then be placed at the top, and since this part of the handle is longer than the other part an adjustment in height can be achieved in order to cater for users of differing stature.

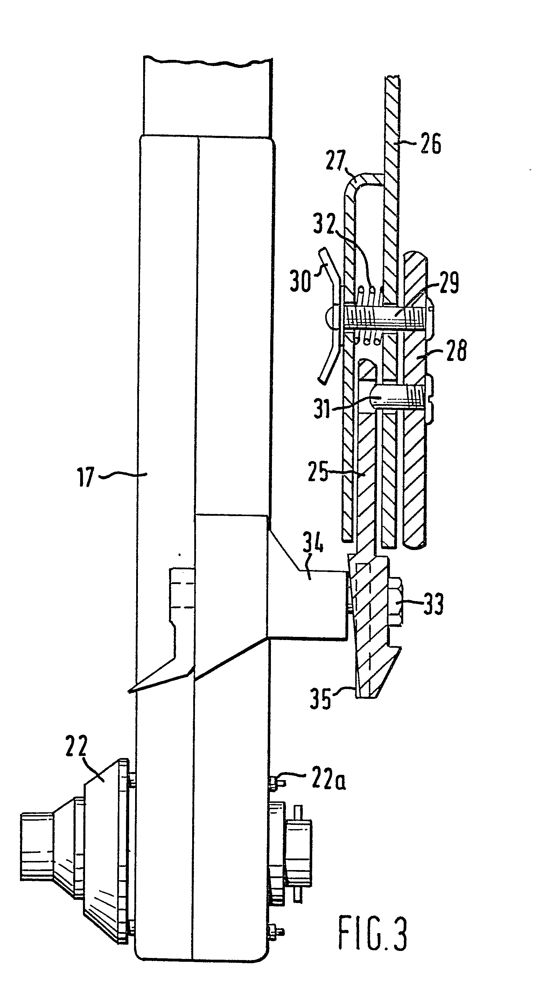

A driving head 17 has an internal worm (not shown) which takes the drive from the shaft of the motor 2 and translates it into a lower speed output of a shaft extending at right angles to the drive, in the outer end of the drive head 17. As shown in Figures 1 and 2 this is used to drive a rotary cutter 18 having a number of shear teeth which cooperate with a pair of stationary shear blades 20 and 21. These shear blades are attached to a stationary holder which is fastened to a holder which is carried by a bottom plate clamped to the head by means of screws 19. Pressure is applied between the cutter 18 and the shear blades 20 and 21 by means of three plungers not shown in these Figures but illustrated in Figure 3 which are located in vertical bores in the head 17 and are backed by springs which are adjusted by means of a screw cap 22.   In order to balance the forces between the stationary cutter blades 20 and 21 and the cutting blades 18 a projection 23 is arranged on the lower support plate 24.   Thus the shear blades 20 and 21 and the projection or bearing pad 23 form a three point suspension upon which the rotating cutter 18 can be supported, this ensuring that a cutting connection is always obtained.

When the machine is to be used for operations such as pruning trees  that are higher than usual, an extension tube may be inserted into the end of the shaft 4 so as to form a double length handle.

The motor 2 is a double-insulated structure and to preserve the integrity of the insulation the head 17 makes a driving connection with the motor shaft by means of an insulated bush which has a cross-slot engaging a cross bar in the end of the motor shaft. This is arranged to slide in endways into the motor housing or vice versa.   The driving head 17 as shown in Figure 3 is guided into connection with the motor, and is finally held in position, by means of a tongue 25 which may also be of insulating material so as to further isolate the driving head from the frame. This tongue engages an extension 26 of the motor bracket 1, and is conventionally provided with a hole by which it is attached to a component such as the extension

9.

26 by means of a screw and nut. However, it is desirable that the head 17 should be capable of being removed from or attached to the motor unit easily and quickly, but at the same time it is essential that it should be provided with positive location. The tongue 26 is therefore provided with a clamp device comprising a cantilever 27 between which and a bar 28 the tongue 25 and the extension 26 are clamped. The clamping is effected by a screw 29 which is fastened to the bar 28 and extends through all the other components to be tightened on the opposite side by a wing nut 30. Positive location of the tongue 25 is secured by a further screw 31 locked into the bar 28 and passing through clearance holes in the extension 26 and the tongue 25. The length of the screw 31 is such that when the wing nut 30 is released to its full extent, the end of the screw 31 is clear of the hole in the tongue 25. The separation of the parts is ensured by inserting a spring 32 in the space between the cantilever 27 and the extension 26 so as to encircle the screw 29.

Screws 33 which clamp the tongue 25 to a boss 34 on the underside of the head 17 also serve to clamp in position a support plate part of which is shown in this Figure at 35 which carries a tool to be driven by the head 17 appropriate to the use to which the

10.

machine is to be put.   In this way, if separate driving heads are available, the tool can be left assembled to the head 17 by means of the support plate 35 so that its method of attachment and its alignment can be left totally undisturbed and the change over between tools can be made more rapidly.

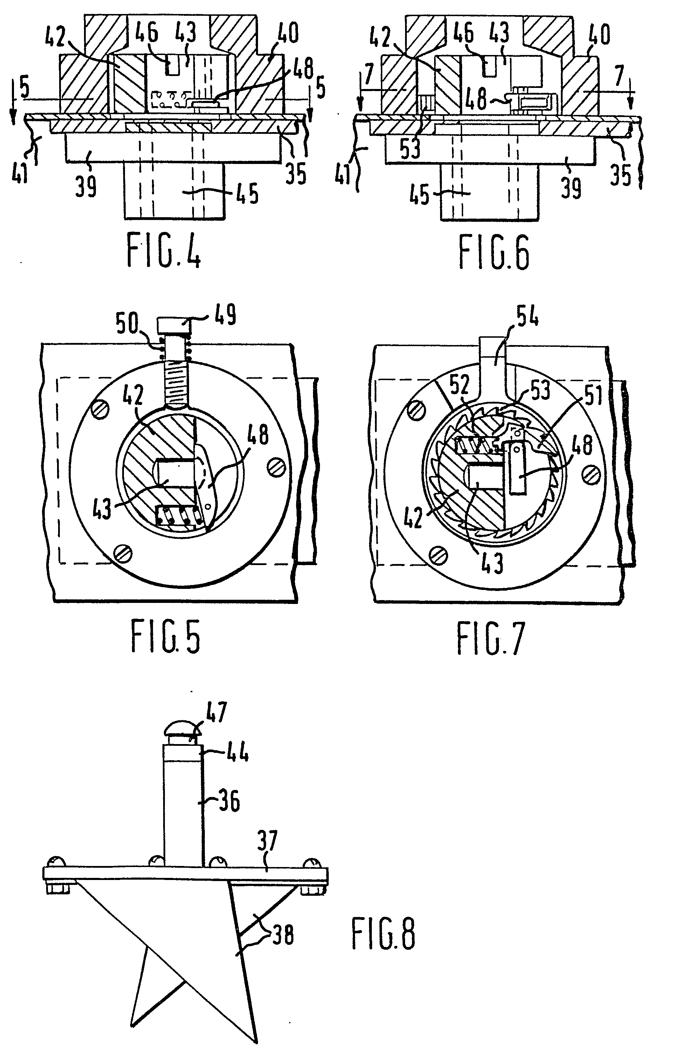

In addition to performing cutting operations, the machine is also intended to carry out digging and aerating functions and the like by means of a suitable tool rotating on the vertical axis of the drive head 17. Such a tool is shown by way of example in Figure 8 and consists of a shaft 36 to which is attached a carrier disc 37 to which is fastened one or more blades such as 38.   The blades may be of widely differing kinds. For example, in addition to the short blades 38 which are used for performing a type of hoeing operation or for weeding, there can be provided a pair of similar but longer blades for digging purposes, and where the ground is particularly hard these may be reinforced by a central spike-like blade which is even longer.   Thus an alternative type of cultivating tool can be cheaply provided by having a number of carrier disc and shaft units equipped with the various blade configurations that are likely to be required.   Changing from one blade to another quickly and easily is made possible

11.

by the provision of a quick-release clutch.

An example of such a clutch is shown in Figures 4 and 5. A support plate 35 is clamped between a lower portion 39 and an upper portion 40 of the clutch housing, a guard plate 41 being also clamped between these two members. The upper portion 40 of the clutch housing has a neck 42 which fits between the pins 22a of the driving head 17. A clutch body is arranged to float in a cavity in the upper portion of the housing and has a bore 43 with flat sides which engage the flat side of the upper portion 44 of the shaft 36. The fit is such that slight lateral misalignment can be accommodated relative to the position of the shaft which is determined by the bearing 45 which may be a bronze bush. At right angles to this direction of movement there is cut a cross slot 46 in the clutch body 42 for engagement, again with slight transverse freedom, with a cross pin on the output shaft of the drive head 17. The clutch body is thus able to float to accommodate slight misalignment in all lateral directions.

In order to retain the shaft 36 in position in the clutch its head is provided with a groove 47 which is engaged by a spring-loaded detent 48 in a cut-out portion of the clutch body 42. This effectively

12.

locks the shaft 36 in position in the clutch but in order that it should be capable of being withdrawn the housing is provided with a transverse screw 49 which can be used when the clutch is in the correct angular position to engage the tail of the detent 48 to lift it out of engagement with the groove 47. The screw 49 is provided with a spring 50 to prevent it from shaking loose during operation of the unit.

The clutch shown in Figures 4 and 5 is a simple device but it does necessitate rotation until the tail of the detent 48 comes adjacent the end of the screw 49 before it can be released. A somewhat more complicated clutch which can be released in any position is shown in Figures 6 and 7. Parts which perform the same function as those in Figures 4 and 5 have been given the same numeral and will not be described again in detail. In this case the detent 48 operates as before in a cut-out but is pivoted on the opposite side of the cut-out and its tail does not extend beyond the periphery of the clutch body. Its tail however is reduced in thickness and carries pivoted to it a pawl 51 to which the spring loading is applied by means of a spring 52. The arrangement is such that the end of the pawl is pushed outwards by the spring beyond the periphery of

13.

the clutch body and at the same time the detent is urged towards the parallel sided bore 43. The ratchet ring 53 is located in the space between the periphery of the clutch body and the inside of the housing 40 and has a handle 54 projecting laterally through a slot in the housing. In normal operation when a tool is in position and its shaft is held by the detent the pawl 51 is carried round counterclockwise by the clutch body and clicks around the inside of the ratchet ring 53. However, when it is required to release the shaft 36 the handle 54 is used to give the ring a limited forward movement which causes the pawl to drive the tail of the detent 48 inwards and to push the detent itself outwards to free the shaft 46.

It will be seen that the invention provides an extremely versatile tool for a multiplicity of gardening, horticultural or similar jobs which because of its low cost and light weight is especially suitable for use in small undertakings.

14.

CLAIMS:

1. A handle device for a portable power tool comprising two side members and a cross-member joining them and forming with a tool or a support member therefor a trapezoidal structure that widens from the tool or support member towards the cross-member and on which spaced handles are formed or attached.

2. A handle device for a portable power tool comprising two side members and a cross-member joining them and forming with a tool or a support member therefor a frame, the frame members being hinged one to another so that, in one position, a trapezoidal structure is formed that widens from the tool or support member towards the cross-member and on which spaced handles are formed or attached and, in another position, a folded structure is formed that is generally aligned with the tool or support member to provide an extension therefor.

3. A device as claimed in claim 2 wherein means are provided to lock the structure in one position or the other.

4. A device as claimed in Claim 1 wherein the structure, when in the folded position, forms a shallow triangle so as to provide a handle intermediate the ends of one of the side members and somewhat raised in relation thereto.

15.

5.  A device according to any one of the preceding claims wherein the upper ends of the side members are each provided with a handle member having hand grips at unequal radii from a pivot so that they can be rotated to provide alternative handle heights.

6.  A power-operated multi-purpose horticultural device including a handle device as claimed in any one of the preceding claims and a right-angle drive mechanism for a rotary cultivating or cutting tool, the mechanism being detachable from a motor forming the power tool, wherein the mechanism is secured to a motor housing by a tongue of electrically insulating material and the drive from the motor is taken from an electrically insulating dog clutch.

7.  A device as claimed in claim 6 wherein the mechanism has a hollow non-circular output shaft for receiving the spigot of a detachable tool, a detent rotating with the hollow shaft and biassed to engage a notch in the tool spigot, and the detent has a tail by which an abutment on the fixed part of the mechanism can move the detent out of engagement with the tool spigot at least during part of a revolution thereof.

8.  A device as claimed in claim 6 wherein the tongue is arranged to be clamped between a pair of

16.

surfaces associated with the motor and a recess is provided in the tongue for engagement with a withdrawable stud for ensuring positive locking between the tongue and the elements of which said surfaces are a part.

9.     A handle device for a portable power tool substantially as described with reference to or as shown by Figs. 1 to 3 of the Drawings.

FIG.1

FIG.2

0098068

FIG.3

FIG.4

FIG.6

FIG.5

FIG.7

FIG.8